# EUROPEAN PATENT SPECIFICATION

(11) **EP 1 373 695 B1**
(45) Date of publication and mention of the grant of the patent: **30.07.2008**
(21) Application number: 02713301.6
(22) Date of filing: 08.04.2002
(51) Int. Cl.: F02B 47/02

(54) **METHOD OF OPERATING INTERNAL COMBUSTION ENGINE INJECTED WITH CRITICAL WATER**
BETRIEB EINER BRENNKRAFTMASCHINE MIT KRITISCHEM WASSER
PROCEDE D'EXPLOITATION D'UN MOTEUR A COMBUSTION INTERNE INJECTE D'EAU CRITIQUE

(30) Priority: 06.04.2001 JP 2001109177; 17.07.2001 JP 2001217286
(43) Date of publication of application: 02.01.2004
(73) Proprietor: MITSUBISHI HEAVY INDUSTRIES, LTD., Tokyo 100-8315 (JP)
(72) Inventor: YUKI, Akihiro c/o MITSUBISHI HEAVY INUDSTRIES, LTD, Yokohama-shi,Kanagawa 236-8515 (JP); SHIMADA, Takafumi MITSUBISHI HEAVY INDUSTRIES,LTD, Yokohama-shi, Kanagawa 236-8515 (JP); ITOU, Kuninori c/o MITSUBISHI HEAVY INDUSTRIES LTD, Yokohama-shi, Kanagwa 236-8515 (JP); ISHIDA, Hiroyuki MITSUBISHI HEAVY INDUSTRIES, LTD., Nagasaki-shi, Nagas aki 851-6392 (JP)
(74) Representative: HOFFMANN EITLE
(86) International application number: PCT/JP2002/003473
(87) International publication number: WO 2002/081882

(56) References cited:
- EP-A- 0 593 793
- EP-A- 0 887 525
- GB-A- 2 196 384
- US-A- 4 069 794
- US-A- 4 120 268
- US-A- 6 010 544
- US-B1- 6 170 441
- PATENT ABSTRACTS OF JAPAN vol. 2000, no. 04, 31 August 2000 (2000-08-31) & JP 2000 008898 A (MITSUBISHI HEAVY IND LTD), 11 January 2000 (2000-01-11)
- CHMELA F.G. ET AL: 'EMISSIONSVERBESSERUNG AN DIESEL-MOTOREN MIT DIREKTEINSPRITZUNG MITTELS EINSPRITZVERLAUFSFORMUNG' MTZ MOTORTECHNISCHE ZEITUNG vol. 60, no. 9, September 1999, VIEWEG VERLAG, WIESBADEN, DE, pages 552 - 558, XP000870853

## Description

### Technical field

The present invention relates to a method of operating internal combustion engines injected with critical water applied to internal combustion engines such as reciprocating piston engine including spark ignition engine and compression ignition engine (diesel engine), jet engine, gas turbine, etc. in which liquid or gaseous fuel such as petroleum group fuel, hydrogen, natural gas, alcohol, etc. is burned and the combustion gas works as working fluid, specifically a method for realizing low emission combustion by using sub- or super-critical water(hereafter may be referred to as critical water).

### Background art

Nitrogen oxide(NOx) and carbon monoxide emitted into air together with exhaust gas are generated in high temperature zones of combustion. These emission affect the environment, and it is desirable to minimize these emissions.

It is well known that the generation of nitrogen oxide is reduced by adding water in the combustion process of an internal combustion engine. This is due to the cooling effect by the added water. Actually, water injection to a reciprocating engine has been done by two different methods, i.e. direct injection of water into the combustion chamber, or introduction of water into the combustion chamber by way of intake air passage.

In the case where water is directly injected into the combustion chamber, the water injection is generally done during compression stroke before actual combustion process and/or during combustion. This water injection timing is advantageous for reducing the generation of nitrogen oxide, a large quantity of water is able to be injected, and nitrogen oxide can generally be reduced by about 50~60%.

According to EP-A-0 593 793 and/or US-B1-6 170 441 and/or US-A-6 010 544 water and fuel are simultaneously injected into a combustion chamber during the compression stroke and/or around TDC . According to these documents the pressure p and the temperature T used are at the following values: EP-A-0 593 793 , T= 400°, p = 23 MPA ; US-B1-6 170 441 T= 400°, p = 27 MPA (see also claim 4,9, col. 5) ; US-A-6 010 544 , T= 400°, p = 27 MPA.

In the case where water is introduced into the combustion chamber together with the intake air, the intake air is continuously humidified in the upstream or down stream of the intake air flowing through the turbocharger, the compressor of the turbocharger, or the intercooler, or humidified in the intake air chamber and/or intake air passage, or water or steam is injected into the intake air.

In the latter case, the amount of water capable of being introduced into the combustion chamber together with the intake air depends on the pressure and temperature of the intake air. The amount is limited to that with which the intake air is saturated with water vapor. Generally, the pressure of the intake air is about 0.15~0.4 MPa and its temperature is 40~50°C in the case of turbo-charged, inter-cooled engines of present day. With these conditions, the amount which can be introduced is actually limited to a level of amount which can reduce nitrogen oxide by 10∼40%. It is not desirable to lower the pressure or raise the temperature of the intake air because the charging of combustion air into the cylinder is badly influenced resulting in reduction of engine output.

In the case water is introduced to continuously humidify the intake air, a part of the introduced water is not utilized because a part of the water passes through the cylinder together with the intake air during the period when air intake valve and exhaust valve open simultaneously.

On the other hand, an art is disclosed in Japanese Patent Application Publication No. 6-137218, in which water solution of caustic potash is added to and mixed with diesel engine fuel, pressurized and heated to high pressure and temperature above the critical pressure of water to combine the sulfur in the fuel with the caustic potash, and the mixture is injected into the cylinder to be burned.

However, although critical water is used in the art mentioned above, the critical water is used for separating the sulfur in heavy oil by combining the sulfur with the caustic potash not for reducing NOx and CO as in the present invention. The mixing of the water solution into fuel may cause failed self-ignition and reduction in output.

Further, a method of operating an internal combustion engine having at least one combustion chamber, inlet valve, exhaust valve, and injection nozzle from which pressurized and heated mixture of fuel vapor and water vapor is injected into the combustion camber, said mixture being heated by the exhaust gas of the internal combustion engine, characterized in that said mixture is sustained at a pressure higher than 350 atm at least and a temperature higher than 448.8°C at least, by which the fuel steam inverts to a mixture of organic gases, which has chemical composition different from the original composition of the fuel under the pressure and temperature of atmospheric condition, molecular structure different from that of the original composition, and is at least partially volatile under atmospheric condition.

However, according to the conventional art, the pressurized and heated mixture consisting of fuel vapor and water vapor is inverted into volatile, organic gas mixture having molecular structure different from the original structure at a pressure higher than 350 atm and temperature higher than 448.8 °C, then the gas mixture is injected into the combustion chamber from the injection nozzle, not that critical water is generated by pressurizing and heating water to a pressure higher than 350 atm and temperature higher than 448.8 °C as the present invention in which sub- or super-critical water is injected into the combustion chamber separately from the fuel and the fuel is injected into the atmosphere in which particles of water exist. Therefore, the art according to the disclosure is fundamentally different from the art according to the present invention.

Furthermore, a method of operating a compression ignition engine(Diesel)-Rankine cycle reciprocating engine comprising at least one cylinder in which fuel is burnt, a cooling system for intake air and cylinder, and exhaust system associated with said cylinder for conducting exhaust gases from said cylinder, said cylinder comprising the steps of: withdrawing heat from said cooling system and exhaust gases to generate steam; and introducing said steam into said cylinder, wherein said steam and said fuel are introduced separately into said cylinder and interact in the cylinder after ignition has been achieved, is disclosed in WO99/37904. The steam used in the invention is below 580 °C in temperature and below 180 bar in pressure, where critical water can not exist, and it is injected into the cylinder close to the top dead center so that the steam and fuel interact effectively after the fuel ignites. It is also cited that the fuel is injected in a separate chamber for preventing steam air mixing before ignition. From these descriptions, it is recognized that the invention aims to evade the interaction of the fuel with the steam before the fuel ignites in the cylinder, and also to prevent the mixing of the steam with the air in the cylinder before ignition.

Further, US 6 170 441 B1 discloses an engine system employing an unsymmetrical cycle, US 6 010 544 discloses a supercritical water fuel composition and combustion system and EP 0 593 793 discloses simulators for fuel combustion.

### Disclosure of the Invention

The object is to provide a method of operating an internal combustion engine injected with critical water by positively utilizing the advantage of critical water for reducing emissions of nitrogen oxide(NOx) and CO from internal combustion engines such as reciprocating engine including spark ignition engine, compression ignition engine(diesel engine), jet engine, and gas turbine, more specifically, in addition to the reduction of the emissions, which generally accompanies reduction in efficiency and output, for increasing efficiency and output of the engine without sacrificing them for reducing the emissions.

The present invention is a method of operating an internal combustion engine injected with critical water, in which liquid or gaseous fuel such as petroleum group fuel, hydrogen, natural gas, alcohol, etc. is burned in the combustion chamber and the combustion gas works as working fluid, characterized in that the injection of sub- or super-critical water (hereafter referred to as critical water) higher than 250°C and higher than 10 MPa is begun before the injected fuel ignites in the combustion chamber.

Particularly, in the case of a reciprocating piston type internal combustion engine in which the suction, compression, combustion, and exhaust strokes are determined according to crank rotation angles, the period from the start until the end of injection of said critical water is in the crank angle range from 90° BTDC (before the top dead center) until 30 ° ATDC(after the top dead center), preferably in the range before 80° BTDC until 0° (the top dead center), and more preferably in the range from 80 ° BTDC until before the fuel ignites in the combustion chamber and the injection ends at 5° BTDC or just before.

The invention is defined in claim 1 below. The dependent claims are directed to optional features and preferred embodiments.

The present invention is to positively utilize the physical and chemical properties peculiar to sub- and super-critical water. As the dielectric constants of sub- and super-critical water is as low as those of organic solvents, its solubility with hydrocarbon group fuel is improved, and owing to active diffussivity of critical water, the homogeneous phase of water mixed with fuel is attained easily, which reduces local combustion in chamber. Therefore, the generation of thermal NOx can be reduced.

Sub- or super-critical water forms a homogeneous phase with gases such as oxygen, and air, so the formation of homogeneous phase with oxygen is easy and the oxidization of the fuel is done efficiently resulting in effective reduction of CO and smoke(PM). Catalytic action due to the increase of ion product causes similar effect.

Sub- or super-critical water has active diffusivity and low viscosity, it diffuses easily and effects on improvement of combustion efficiency and increase in output. Particularly in diesel engines, because of a homogenized combustion atmosphere and efficient combustion, the output (efficiency) and emission of NOx are largely improved without sacrificing either one. The existence of sub- or super-critical water increases ion product and the acid/alkali catalytic action is excited resulting in promoting the reduction of thermal NOx and CO.

Physical property changes largely near critical point depending on temperature and pressure, so the physical property of super- or sub- critical water can be controlled by controlling the temperature and pressure. Therefore, it is possible by this controlling to inject sub- or super critical water suitable to the variety of hydrocarbon group fuel and fuel injection pattern which depends on the engine load and rotational speed of engine.

As super-critical water has a large diffusion constant, mixing of the fuel with the water or steam is attained well in the combustion chamber. Further, the super-critical water dissolves into the fuel being different from water particle in fuel, since super-critical water has a property like an organic solvent, so more homogeneous combustion field can be formed.

The fuel/air ratio is about 1 : 30 in diesel engines. By injecting critical water by a ratio of about 1∼4 to the fuel in mass (fuel : air : critical water = 1 : 30 : 1∼4), said homogeneous combustion field can be obtained.

When the start of injection of critical water is in the crank angle range of -90° ∼ -10° from the top dead center, particularly -80° ~ -20° more preferably -60° ~ -20° to -30°, the drop in pressure of the injected critical water due to its instantaneous expansion in combustion chamber is small because the piston is still in the later stage of the compression stroke, so super- or sub-critical state of the injected critical water is maintained and said effect according to the invention is attained.

Further, when the start of injection of critical water is in the crank angle range of -30° ~ +30° from the top dead center, particularly in the combustion range of -10° ~ +30°, the temperature in the combustion chamber is high with maximum level of 2000 °C and the property of super- or sub-critical state of water is substantially maintained after the instantaneous expansion of the injected critical water, so said effect according to the present invention is attained.

It is preferable that said critical water is super-critical water above 374 °C and above 22 MPa, however, nearly similar effect is obtained with sub-critical water above 250 °C~300 °C and above 10 MPa.

Said critical water is easily obtained by producing sub- or super-critical water through heat exchange with exhaust gas, for the exhaust gas temperature of a diesel engine or gas turbine is about 550 °C or higher.

In the preferred embodiment of the present invention, it is preferable that the injection of said critical water is done so that the water particles thereof exist in the combustion chamber before the injected fuel ignites, and interfere with the fuel, in other word, that the water particles generated by the combustion of the fuel and the water particles of the critical water exist in the state not separated in individual layers in combustion process.

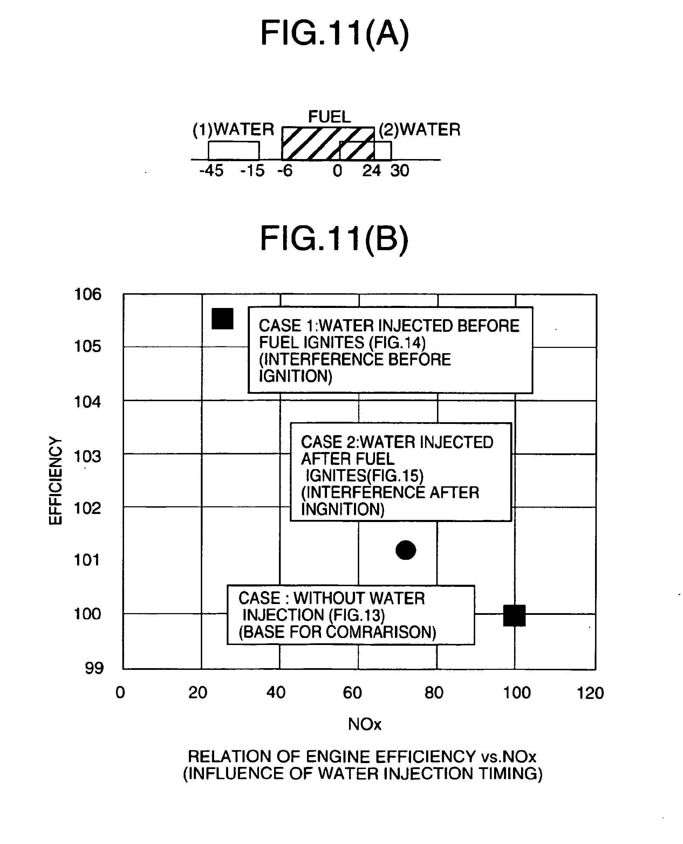

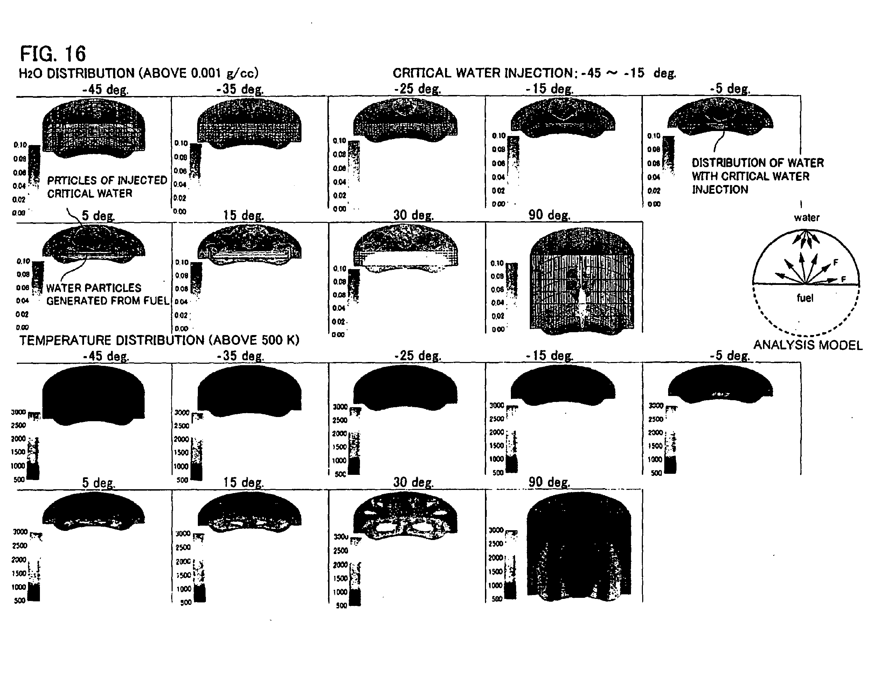

It was ascertained that when sub- or super-critical water above 250 °C and above 10 MPa is injected before the fuel ignites in the combustion chamber and the water particles of the critical water injected into the combustion chamber interfere with those of the fuel oil, more concretely, when said critical water is injected into the combustion chamber so that it interferes with the spray of the fuel injected in the combustion chamber, the emission of NOx reduces and the engine power increases effectively not necessarily limited by the range of the critical water injection timing as cited in the invention, as shown in FIG.11 ∼ FIG.16.

### Brief Description of the Drawings

FIG.1 is the representation of a basic configuration (1) showing the locations of the fuel injection nozzle and critical water injection nozzle of a diesel engine injected with critical water of the embodiment according to the present invention.
FIG.2 is the representation of a basic configuration (2) showing the locations of the fuel injection nozzle and critical water injection nozzle of a diesel engine injected with critical water of the embodiment according to the present invention.
FIG.3 is the representation of a basic configuration (3) showing the locations of the integrated fuel injection and critical water injection nozzle of a diesel engine injected with critical water of the embodiment according to the present invention.
FIG. 4 a schematic representation of the system of the diesel engine injected with critical water including the case of FIG.1 to FIG.3.
FIG.5 is a diagram showing the valve timing of a 4-stroke cycle diesel engine.
FIG.6 is a graph showing the improvement of engine output due to super-critical water injection.
FIG.7 is a graph showing the reduction in NOx in the exhaust gas due to super-critical water injection.
FIG.8(A) is a graph showing the reduction in color density of the exhaust gas due to super-critical water injection, and (B) is a graph showing the reduction in CO in the exhaust gas due to super-critical water injection.
FIG.9 is a graph showing the improvement of engine output depending on the timing of super-critical water injection.
FIG. 10 is a graph showing the reduction in NOx in the exhaust gas depending on the timing of super-critical water injection.
FIG.11 is a graph showing the comparison of the improvement in NOx reduction and engine output of the case 1 in which the injection period of critical water is from -45° to -15° from the top dead center (water injection before ignition), the case 2 in which the injection period of critical water is from 0° to 30° (water injection after ignition), and the case in which critical water is not injected.
FIG .12 is a graph showing the comparison of the improvement in NOx reduction and engine output of the case 1 in which the degree of interference of critical water with fuel spray is increased, and the case in which the degree of interference of critical water with fuel is decreased.
FIG.13 is a representation of a simulation result of water and temperature distribution in the combustion chamber in the case without water injection, upper two rows showing water distribution and lower two rows showing temperature distribution in the combustion chamber at some crank angles between -30° ∼ +90° .
FIG.14 is a representation of a simulation result of water and temperature distribution in the combustion chamber in the case 1 in which critical water is injected from the center of the combustion chamber with injection period from -45° to -15° of crank angle from the top dead center.
FIG. 15 is a representation of a simulation result of water and temperature distribution in the combustion chamber in the case 2 in which critical water is injected from the center of the combustion chamber with injection period from 0° to +30° of crank angle from the top dead center.
FIG.16 is a representation of a simulation result of water and temperature distribution in the combustion chamber in the case 1 in which critical water is injected from the side part of the combustion chamber with injection period from -45° to -15° of crank angle from the top dead center.

### Best mode for embodiment of the Invention

A preferred embodiment of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

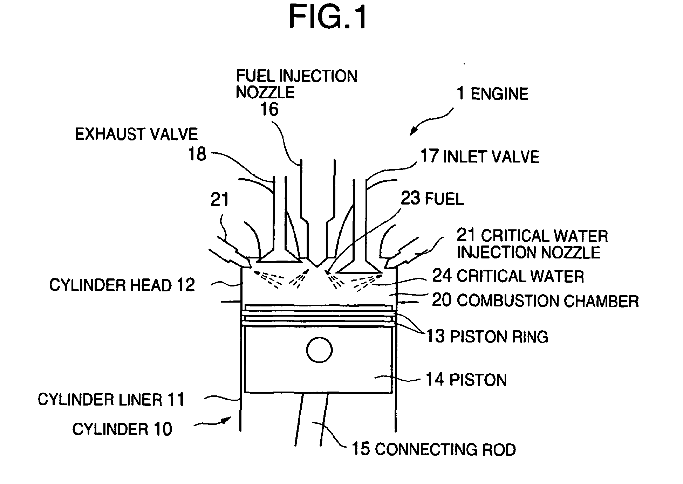

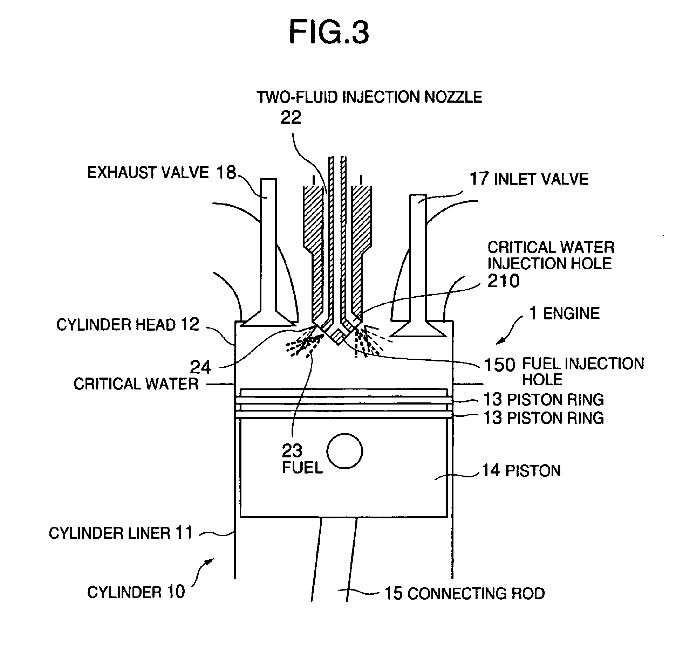

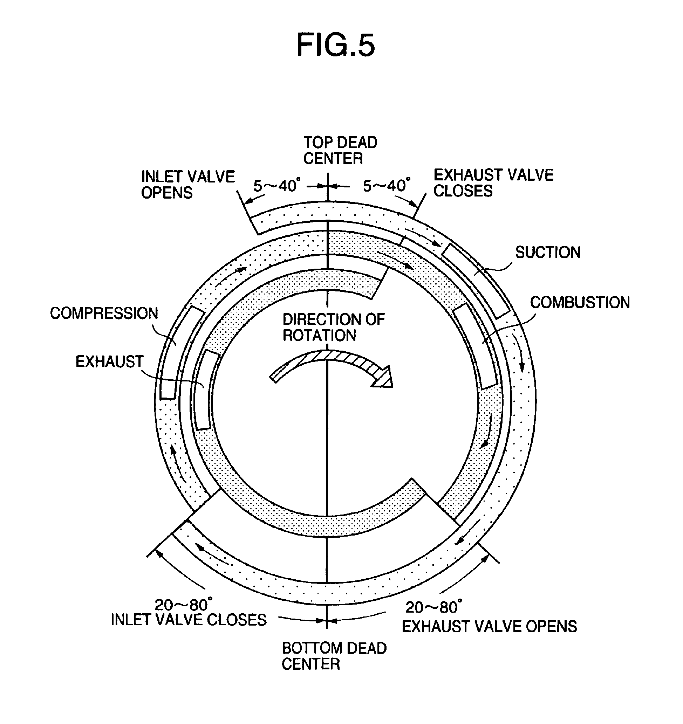

FIG.1 ∼ FIG.3 show examples of configuration of a reciprocating internal combustion engine, specifically a 4-stroke cycle diesel engine, of the embodiment according to the present invention. The concerned engine 1 comprises a cylinder 10 including a cylinder liner 11 and a cylinder head 12, a piston 14 equipped with piston rings 13, and a connecting rod 15 for transmitting the reciprocating motion of the piston 14 to the load by way of a crank shaft not shown in the drawing. A fuel injection nozzle 16 is equipped facing the combustion chamber 20 in the center part of the cylinder head 12, and at both sides of the nozzle are provided an inlet valve 17 for introducing intake air into the cylinder 10 and an exhaust valve 18 for letting out exhaust gas. The basic processes of suction, compression, combustion and expansion, and exhaust are performed per 2 rotations of the crankshaft as shown in FIG.5 of valve timing diagram.

As shown in FIG. 5, the inlet valve opens in the crank angle range of -45° ~ -15° from the top dead center and closes in the range of +20° ~ +80° from the bottom dead center, and the air taken-in in the cylinder 12 is compressed as the piston moves upward.

The compressed air rises in temperature above the self-ignition temperature of the injected fuel. When the fuel is injected from the injection nozzle 16 near the end of compression stroke (at crank angle about -5° ∼ -20° from the top dead center), the fuel is heated by the high temperature of the compressed air and ignites to burn, temperature and pressure increase rapidly, and the piston 14 is pushed down toward the bottom dead center after it passes the top dead center.

The exhaust valve 18 opens before the piston 14 reaches the bottom dead center of combustion and expansion stroke(at about -20° ~ -80° from the bottom dead center), the combustion gas blows out of the cylinder 10 by the pressure of itself, and then the gas is pushed out by the piston 14 as it moves upward.

A 4-stroke cycle engine of the configuration like this is well known.

The driving of the fuel injection nozzle 16 and opening/closing of the inlet valve 17 and exhaust vale 18 are done by means of timing gears driven by the crankshaft not shown in the drawings.

A critical water injection nozzle or nozzles 21 are provided in the upper part of the combustion chamber 20 in the outer side of the inlet valve 17 and exhaust valve 18.

It is suitable to select the timing of critical water injection, the location of the critical water injection nozzle 21, and the diameter and direction of the injection hole thereof so that the injected fuel contacts with the particles of the critical water expanded in the combustion chamber, in other word, so that the critical water interferes with the fuel spray.

For example, in FIG.1, the fuel injection nozzle 16 is provided in the center part of the combustion chamber 20 formed in the upper part of the cylinder, and the critical water injection nozzles 21 are provided so that the injection hole or holes thereof incline and direct toward the center side of the cylinder.

In this case, the critical water injection nozzles 21 are provided remote from each other because they are located sandwiching the inlet and exhaust vale 17, 18, so it is required that the injection velocity of critical water is so determined that the critical water injected from the critical water injection nozzle interferes with the fuel spray in the combustion chamber. Specifically, it is suitable to increase the injection velocity with small diameter of injection hole or holes, that is, to increase the injection pressure of critical water.

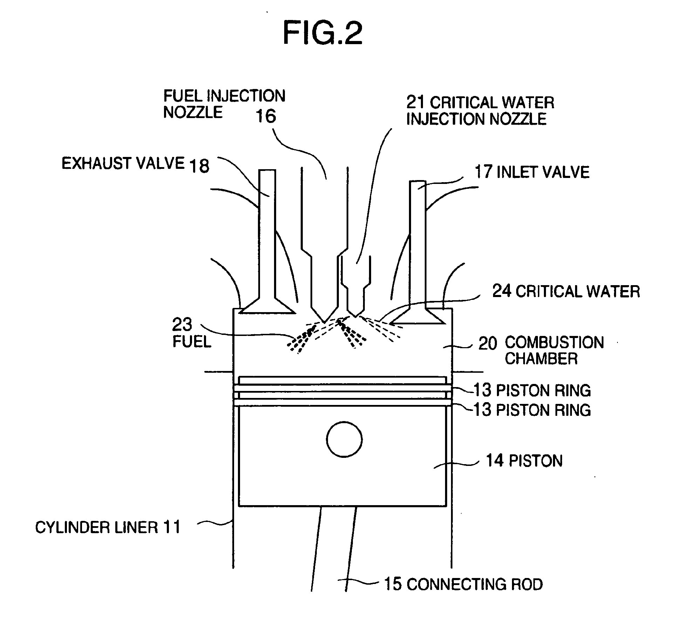

In FIG.2, the critical water injection nozzle 21 and fuel injection nozzle 16 are located in the center part of the combustion chamber 20 adjacent to each other, the distance between them is small, so the critical water injected from the critical water injection nozzle 21 interferes sufficiently with the fuel spray injected into the combustion chamber 20.

In FIG.3, a two-fluid injection nozzle 22 is applied which integrates a fuel injection nozzle and critical water injection nozzle in a unit. In the embodiment, the location of fuel injection holes 150 is different from that of critical water injection holes 210 in the vertical direction, fuel being injected from the lower side holes 150 and critical water being injected from the upper side holes 210. As the distance between the lower side holes and upper side holes is small, the critical water injected from the upper side holes 210 interferes sufficiently with the fuel spray injected from the lower side holes 150 into the combustion chamber.

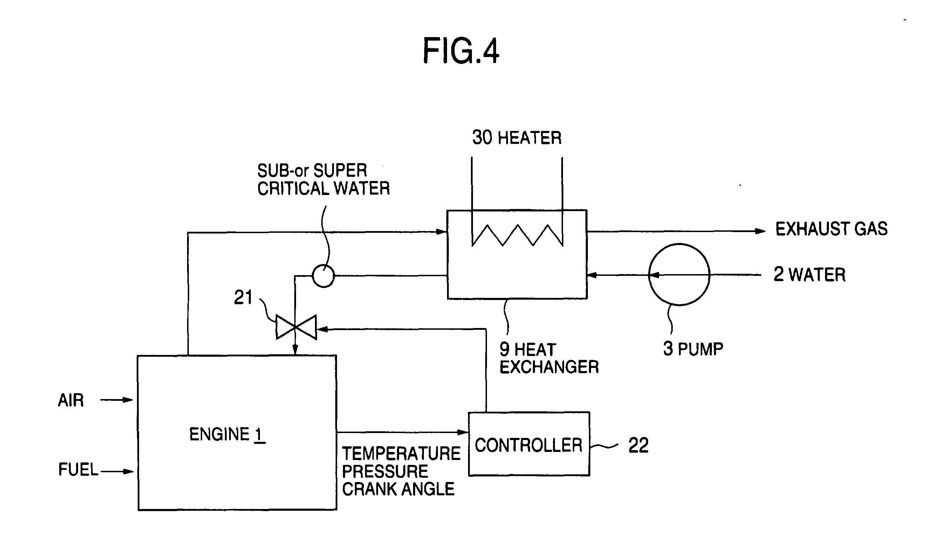

The opening/closing timing of the critical water injection nozzle holes 210 may be determined together with the inlet/exhaust valve timing by way of timing gears driven by the crankshaft or controlled based on the signal from a controller 022 (see FIG.4) which detects operating conditions such as the pressure and temperature in the cylinder and the rotation angle of the crankshaft, etc.

In the case of the timing of the critical water injection is controlled based on the signal from the controller 022, it is suitable that the start of critical water injection is when the temperature in the cylinder is higher than that of the critical water before the fuel ignites in the combustion chamber, it may be in the crank angle range of -90° ∼ -10°, particularly in the range of -80° ∼ -20° , more preferably in the range of -60° ~ -20° to -30° from the top dead center, and the end of the injection of the critical water is earlier than +30° (30° after the top dead center), preferably at 0° (the top dead center), more specifically, at -5° or just before the fuel ignites in the combustion chamber.

When the injection timing of critical water is set based on the crank angle, the start of critical water injection is determined by way of timing gears without detecting the temperature in the cylinder, etc.

FIG.4 is an embodiment of the system in which the engine 1 is equipped with devices for critical water injection.

In the embodiment, water 2 to be supplied is pressurized to 10 MPa or higher by a pump 3, preferably 22 MPa or higher, then heated to 250 °C or higher, preferably 374 °C or higher by a heat exchanger 9 or by a heat exchanger 9 and heater 30.

Sub-critical water above 250 °C and above 10 MPa, preferably super-critical water above 374 °C and above 22 MPa generated in the heat exchanger 9 is injected from the critical water injection nozzle 21 with the timing determined by the controller 022. It is preferable to determine the injection duration so that the injection quantity of critical water allows the mass ratio of fuel/air/critical water to stand at about 1/30/1∼4.

Next, the result obtained by the system shown in FIG. 4 will be explained. Test conditions were as follows:
fuel injection period; from -6 ° to ∼ +24° from the top dead center,
critical water injection start; changed in the range of -50° to 0° from the top dead center,
injection pressure of critical water; 35 MPa, and
injection quantity of critical water; 1-5 times the fuel injection quantity in mass.

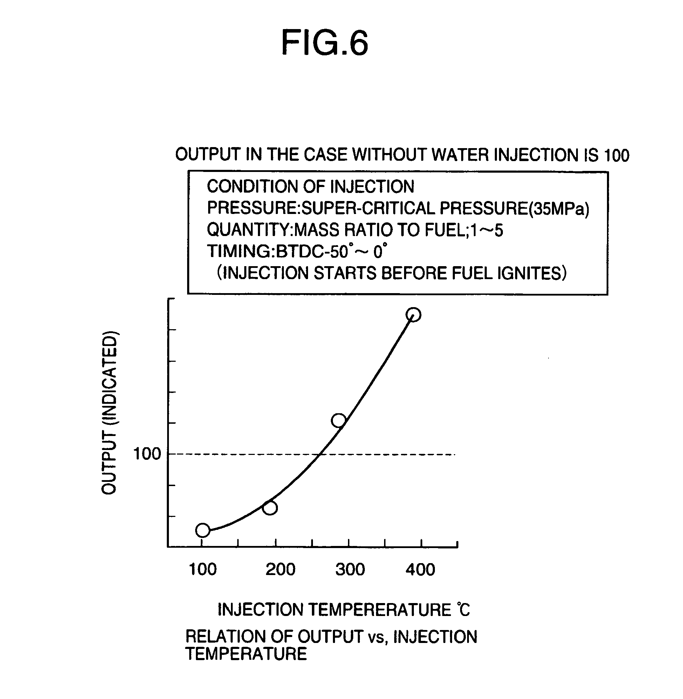

FIG.6 shows the relation of engine output vs. injection temperature of water. The ordinate represents the ratio of the output to the output when critical water is not injected which is assumed as 100. The phase of water approaches the sub-/supr-critical region as the temperature rises, and when the injection temperature enters in this region of 250 °C ~ 300 °C or higher, particularly 374 °C or higher, improvement in output is attainable.

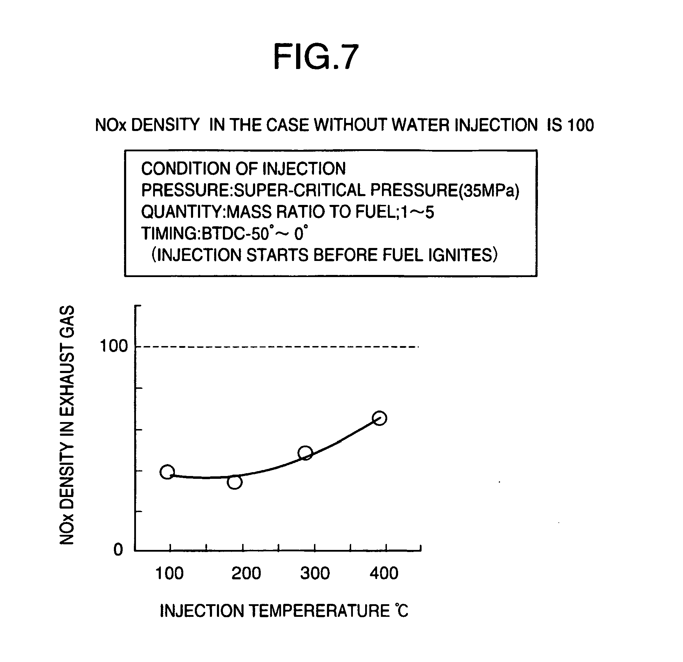

FIG. 7 shows the relation of NOx density in exhaust gas vs. injection temperature of water. Improvement in NOx emission is attainable even below 250 °C. However, evaluation together with FIG.6 tells that by injecting sub-critical water above 250 °C or super-critical water above 374 °C, improvements in both output and NOx emission are attainable.

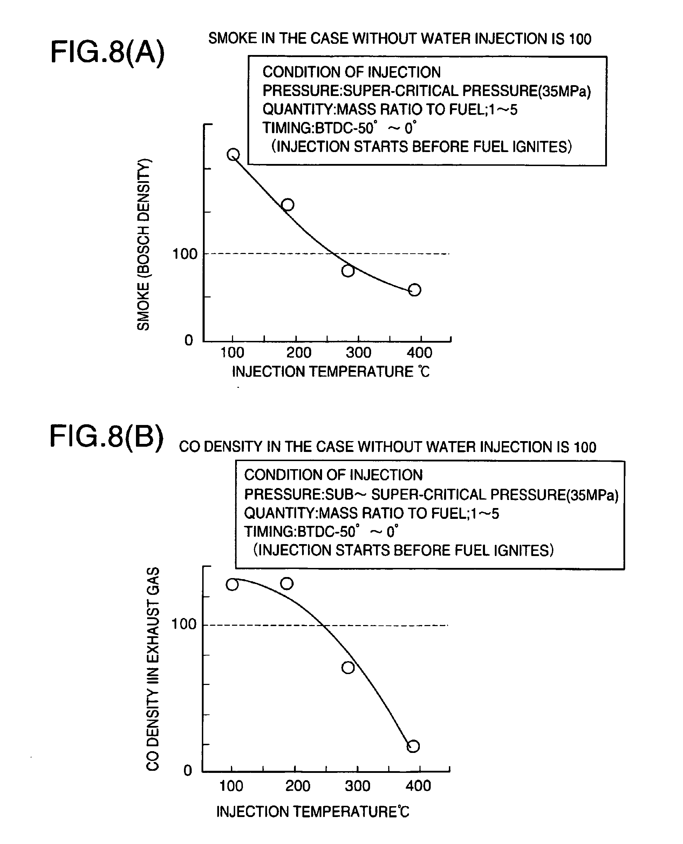

FIG.8(A) shows the relation of smoke density of exhaust gas vs. injection temperature of water. Improvement is attainable in the sub-critical temperature region above 250 °C and further in the super-critical temperature region above 374 °C.

FIG.8(B) shows the relation of CO density in exhaust gas vs. injection temperature of water. Improvement is attainable in the sub-critical temperature region above 250 °C, preferably in the super-critical temperature region above 374 °C. Particularly, improvement is conspicuous in the super-critical temperature region above 374 °C, which means combustion efficiency is largely improved.

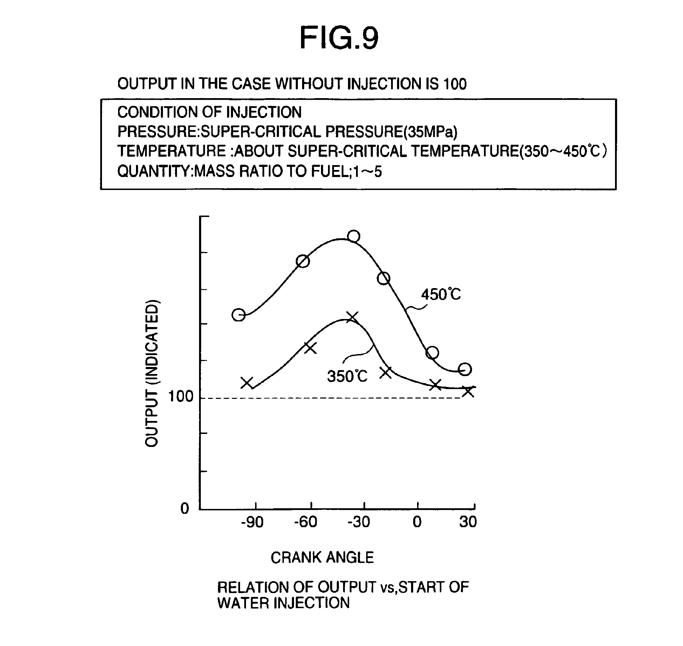

Next, the relation of engine output and NOx density vs. the start of injection of water will be explained. FIG. 9 shows the relation of engine output vs. the start of water injection. Tests were performed with sub-critical water of 350 °C, and super-critical water of 450°C. Improvement in engine output is attainable when the injection is begun near crank angle of -80 ° ~ -20° in both cases.

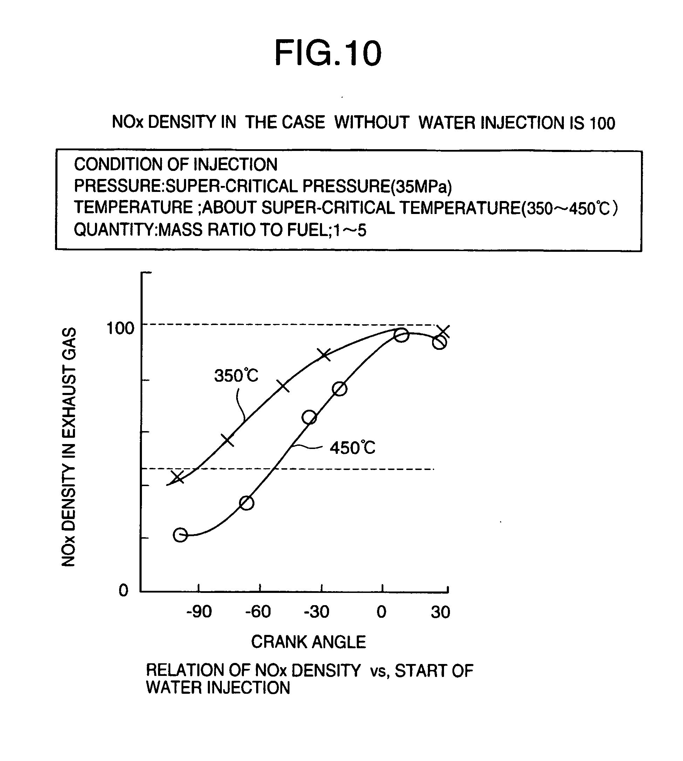

FIG.10 shows the relation of NOx density vs. the start of water injection. Tests were performed with sub-critical water of 350 °C, and super-critical water of 450 °C. The earlier the start of the injection is than the ignition of the fuel in the combustion chamber, the larger the reduction in NOx density is in both cases.

Therefore, when setting the timing of the start of injection of critical water, if a premium is put on output, it is preferable to set the timing in the crank angle range of -90° ∼ -10° , particularly, in the range of -80 ° ~ -20° which belongs the range of late stage of compression stroke before the fuel is injected. If a premium is put on NOx, the earlier the injection timing is, the larger the improvement is.

Next, examples of simulation of the present invention will be explained by referring to FIG.11 ~ FIG.16.

FIG.11 shows the result of simulation with the engine of FIG.2. In the case 1, fuel injection period is from -6° to +24° , critical water injection period is from -45° to -15° (injection before the fuel ignites) : and in the case 2, fuel injection period is from -6° to +24° , critical water injection period is from 0° to +30° (injection after the fuel ignites). Further, the result of the case in which critical water is not injected with fuel injection period of from -6° to +24° is shown for comparison in FIG.11.

The critical water is injected at pressure of 30 MPa, temperature of 423 °C, and the mass ratio of the injection quantity of the critical water to that of the fuel is 1.

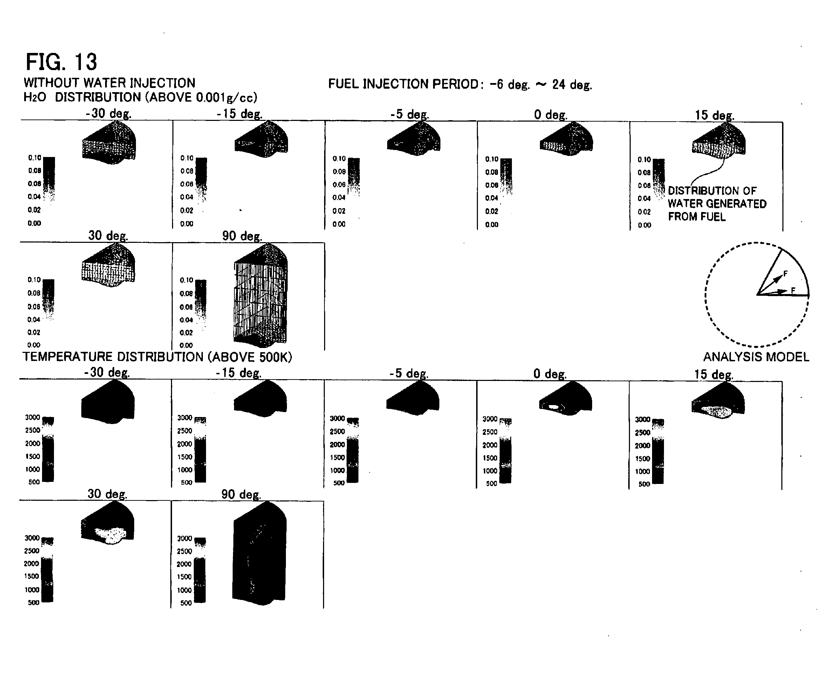

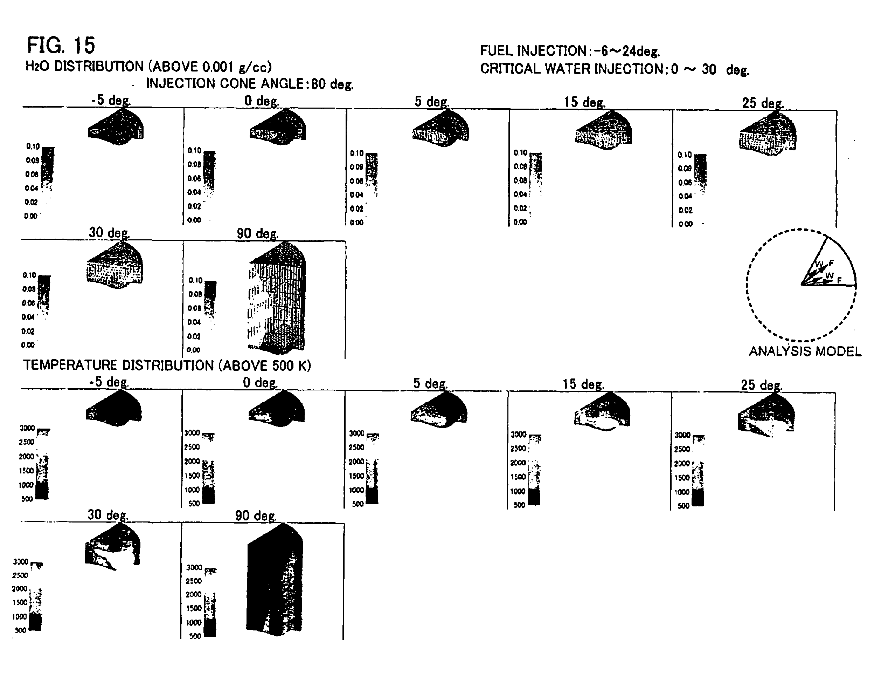

Water distribution and temperature distribution in the combustion chamber in each case are shown in FIG.13 ∼ FIG.15. In the figures, upper two rows show water distribution in the combustion chamber at some crank angles between -30 ° ∼ +90° , and lower two rows show temperature distribution in the combustion chamber at some crank angles between -30° ∼ +90° , in which 0° indicates the top dead center. Ignition begins at about -5° in all three cases.

In the case without critical water injection, ignition begins at about crank angle of -5° , and water particles (steam) generated by the combustion gradually spread in the combustion chamber until 30°. Concerning temperature distribution, there are regions where the temperature rises to 2000 °C ∼ 3000 °C during crank angles of 0° ∼ 30°. Accordingly NOx density is high in this case as seen in FIG. 11.

In the case 2 in which the injection period of the critical water is from crank angle of 0° to 30° (injection after the fuel ignites), ignition begins at about -5° . As the critical water is injected during 0° ~ 30° after the ignition of fuel, water particles (steam) rapidly spread until 30° as seen in FIG.15. In this case with water injection after ignition, the temperature in the combustion chamber is lower than that in the case without water injection, however, there are regions where the temperature rises to 2000 °C∼ 2500 °C during crank angles of 0° ∼ 30° . Therefore, NOx quantity is reduced by about 25% and efficiency is improved by about 1% compared with the case without water injection as seen in FIG.11, however, the effect of the critical water injection is very small compared with the case 1.

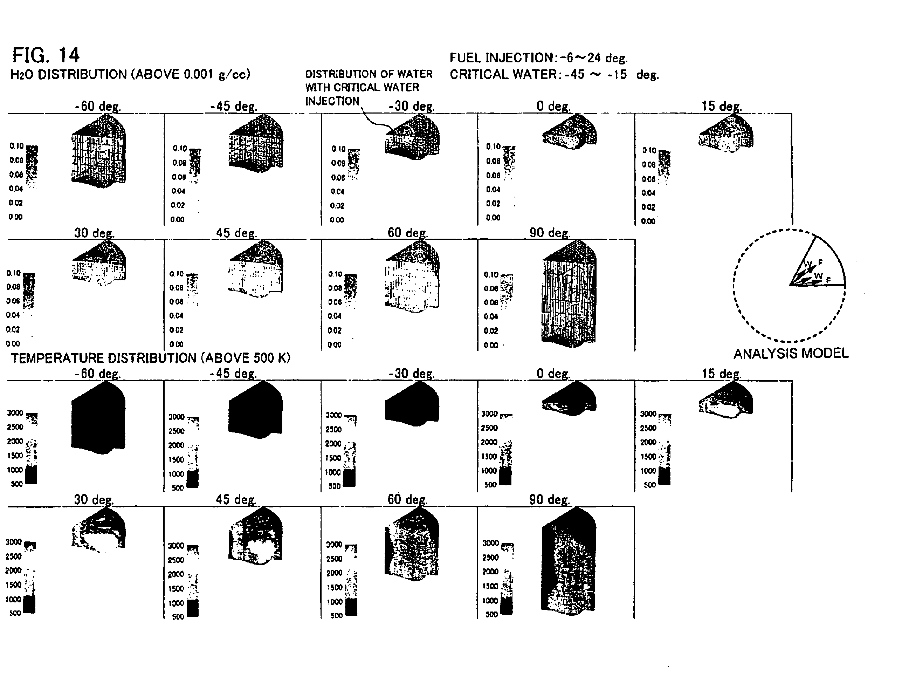

In the case 1 in which the injection period of the critical water is from crank angle of -45° to 15° (injection before the fuel ignites), water particles spread sufficiently in the combustion chamber at the crank angle of 30° owing to the critical water injection at about -45° before the fuel ignites, and enough water particles exist even at 60° as seen in FIG. 14. In this case 1 with water injection before ignition, the temperature in the combustion chamber further decreases than in the case 2 to a temperature lower than 2000 °C during crank angles of 15° ~ 30°. Accordingly, NOx quantity is as low as 20% of that in the case without water injection, which means reduction of 80%, and efficiency is also improved by above 5%, thus the effect of the critical water injection is remarkable compared with the case 2.

So, it is recognized that with the same injection quantity/temperature/pressure, the effect of critical water injection in reducing NOx and improving efficiency is larger in the case 1 in which critical water is injected before the fuel ignites (before the injection of fuel) than in the case 2 in which critical water is injected after the fuel ignites.

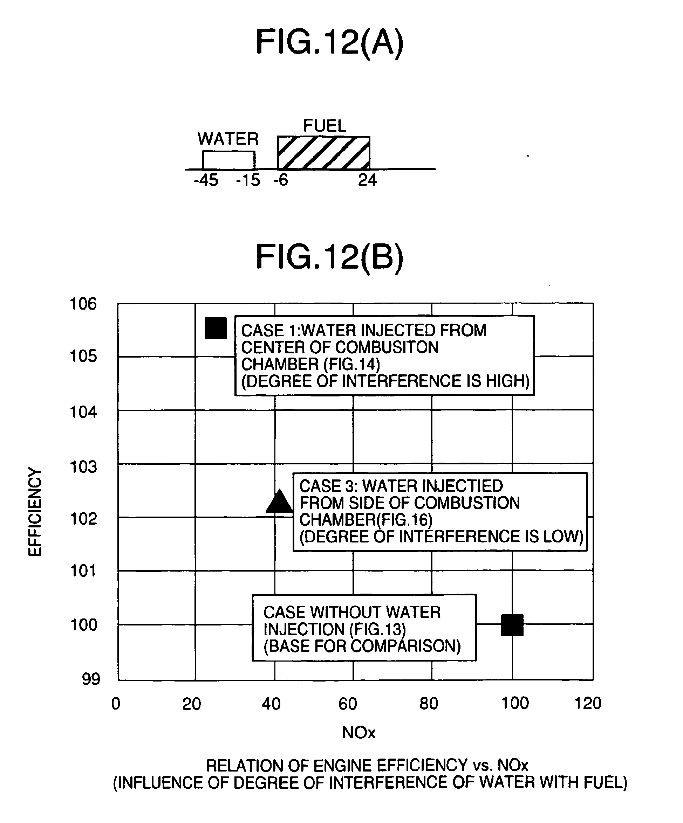

Next, the effect of degree of interference of the critical water with the fuel spray will be explained by referring to FIG.12.

The case 1 shows the result when the interference of water with fuel spray is intensified with the engine of FIG.2 or FIG.3 in which critical water and fuel are injected from the center part of the combustion chamber.

The case 3 shows the result when the interference of water with fuel spray is weakened with the engine of FIG. 1 in which critical water is injected from the side end part of the combustion chamber. The injection timing of fuel and critical water is the same as in the case 1.

The critical water is injected at a pressure of 30 MPa, a temperature of 423 °C, and the mass ratio of the injection quantity of the critical water to that of the fuel is 1, the same as in the case 1.

In the case 3, although the critical water injection starts early at crank angle -45° , water particles do not spread sufficiently even at -5° when the ignition begins as seen in FIG.16, so it can be said that the degree of interference is low. It can also be seen that high temperature region exists with 2000°C or higher in the region where water particles do not spread sufficiently during crank angles of 15° ∼ 30°.

It can be said that from FIG.14 that, in the case 1, the water particles generated by the combustion of the fuel and those of the injected critical water spread sufficiently during crank angle of 0° ~ -60° . This means that sufficient water exists in the field where fuel is injected, and sufficient interference of fuel with water occurs before the fuel ignites in the case 1 of FIG.14.

On the contrary, small amount of water exists in the field where fuel is injected, and degree of interference of fuel with water is low before the fuel ignites in the case 3 of FIG.16.

As a result, as seen in FIG.12, Nox quantity becomes to 40% of the case without water injection and also efficiency is improved by 2%, however, the degrees of improvements do not reach those in the case 1.

So, it can be said that with the same injection quantity/temperature/pressure, the effect of critical water injection in reducing NOx and improving efficiency is larger in the case 1 with strong interference as shown in FIG. 14 than in the case 3 with weak interference as shown in FIG.16.

Therefore, it can also be said that by comparison of the case 1 with the case 3 that with the same injection condition in critical water quantity /temperature/pressure, the effect n reducing NOx and improving efficiency is larger when the interference of the water with fuel spray is high, and that it is necessary for attaining sufficient improvement in reducing NOx quantity in exhaust gas and increasing efficiency to inject water before the fuel ignites to make the fuel spray interfere with water spray.

The result of the simulation does not deny the method of injecting water from side end parts of the combustion chamber as shown in FIG. 1. It is acceptable to inject water from side end parts of the combustion chamber as far as the water is injected so as to attain sufficient interference of the water spray with the fuel spray before the fuel ignites.

### Applicability in industry

As has been described in the forgoing, according to the present invention, water is pressurized by a pump to a level of sub- or super-critical pressure, heated to a level of sub- or super-critical temperature, and the produced water is injected in the combustion chamber before the fuel ignites so that the water interferes with the fuel spray injected into the combustion chamber. By this, the combustion in the combustion chamber is improved owing to the peculiar physical and chemical properties of sub- or super-critical water and low-emission combustion is attained, more specifically, in addition to the reduction in the emission of nitrogen oxide and CO, engine efficiency and output can be increased.

## Claims

1. A method of operating an internal combustion engine injected with critical water, in which liquid or gaseous fuel such as petroleum group fuel, hydrogen, natural gas, alcohol, etc. is burned in the combustion chamber and the combustion gas works as working fluid, wherein the injection of sub- or super-critical water (hereafter referred to as critical water) higher in temperature than 250 °C and higher in pressure than 10 MPa is started in the compression stroke before injected fuel ignites in the combustion chamber, wherein said engine is a reciprocating piston type internal combustion engine in which the suction, compression, combustion and expansion, and exhaust stroke are determined according to crank rotation angles, and the period from the start until the end of injection of said critical water is in the range from 90° BTDC (before the top dead center) until 30 ° ATDC(after the top dead center), and wherein, in the reciprocating internal combustion engine, the period from the start until the end of injection of said critical water is in the range from 80 ° BTDC until before the fuel ignites in the combustion chamber and the injection ends at crank angle of 5 ° BTDC or just before.

2. A method of operating an internal combustion engine injected with critical water according to claim 1, wherein said critical water is super-critical water of a temperature higher than 374 °C and pressure higher than 22MPa.

3. A method of operating an internal combustion engine injected with critical water according to claim 1, wherein said critical water is sub- or super-critical water produced by changing heat with the exhaust gas of the engine.

4. A method of operating an internal combustion engine injected with critical water according to claim 1, wherein said critical water is injected so that the particles of the critical water exist in the combustion chamber before the fuel ignites and interfere with the fuel sprayed in the combustion chamber.

5. A method of operating an internal combustion engine injected with critical water according to claim 1, wherein said critical water is injected so that the water particles generated by the combustion of the fuel and the water particles of the critical water exist in the state not separated in individual layers in the process of combustion.

6. A method of operating an internal combustion engine injected with critical water according to claim 1. wherein the particles of the critical water sprayed into the into the combustion chamber interfere with the particles of the sprayed fuel.

7. A method of operating an internal combustion engine injected with critical water according to claim 6, wherein said critical water is injected into the combustion chamber so that it interferes with the fuel injected into the combustion chamber.

## Patentansprüche

1. Verfahren zum Betreiben eines Verbrennungsmotors, in den kritisches Wasser injiziert wird, und in dem flüssiger oder gasförmiger Brennstoff wie Brennstoff der Petroleumgruppe, Wasserstoff, Erdgas, Alkohol usw. in der Verbrennungskammer verbrannt werden und das Verbrennungsgas als Arbeitsfluid arbeitet, wobei die Einspritzung von überkritischem oder unterkritischem Wasser (im Anschluss als kritisches Wasser bezeichnet), das in der Temperatur höher als 250 °C und im Druck höher als 10 MPa ist, im Kompressionshub vor der Zündung des eingespritzten Brennstoffs in der Verbrennungskammer begonnen wird, wobei der Motor ein Verbrennungsmotor mit sich hin- und herbewegendem Kolben ist, in dem der Ansaug-, Kompressions-, Verbrennungs- und Expansions- sowie der Ausschub-Takt gemäß dem Kurbel-Rotationswinkel bestimmt werden und die Zeitdauer vom Start bis zum Ende des Einspritzens des kritischen Wassers im Bereich von 90 ° BTDC (vor dem oberen Totpunkt) bis 30 ° ATDC (nach dem oberen Totpunkt) liegt, und wobei in dem sich hin- und herbewegenden Verbrennungsmotor die Zeitdauer vom Start bis zum Ende des Einspritzens des kritischen Wassers im Bereich von 80 ° BTDC bis vor der Zündung des Brennstoffs in der Brennstoffkammer liegt und die Einspritzung bei einem Kurbelwinkel von 5 ° BTDC oder direkt davor endet.

2. Verfahren zum Betreiben eines Verbrennungsmotors, in den kritisches Wasser eingespritzt wird, gemäß Anspruch 1, wobei das kritische Wasser überkritisches Wasser mit einer Temperatur höher als 374 °C und einem Druck höher als 22 MPa ist.

3. Verfahren zum Betreiben eines Verbrennungsmotors, in den kritisches Wasser eingespritzt wird, gemäß Anspruch 1, wobei das kritische Wasser unter- oder überkritisches Wasser ist, das durch Veränderung der Wärme mit dem Abgas des Motors erzeugt wird.

4. Verfahren zum Betreiben eines Verbrennungsmotors, in den kritisches Wasser eingespritzt wird, gemäß Anspruch 1, wobei das kritische Wasser überkritisches Wasser mit einer Temperatur höher als 374°C und einem Druck höher als 22 MPa ist.

5. Verfahren zum Betreiben eines Verbrennungsmotors, in den kritisches Wasser eingespritzt wird, gemäß Anspruch 1, wobei das kritische Wasser so eingespritzt wird, dass die Wasserpartikel, die durch die Verbrennung des Brennstoffs erzeugt wurden, und die Wasserpartikel des kritischen Wassers in einem Zustand vorliegen, in dem sie nicht in individuellen Schichten im Verbrennungsprozess separiert sind.

6. Verfahren zum Betreiben eines Verbrennungsmotors, in den kritisches Wasser eingespritzt wird, gemäß Anspruch 1, wobei die Partikel des kritischen Wassers, die in die Verbrennungskammer hineingesprüht wurden, mit den Partikeln des eingesprühten Brennstoffs in Wechselwirkung treten.

7. Verfahren zum Betreiben eines Verbrennungsmotors, in den kritisches Wasser eingespritzt wurde, gemäß Anspruch 6, wobei das kritische Wasser so in die Verbrennungskammer eingespritzt wurde, dass es mit dem in die Verbrennungskammer eingespritzten Brennstoff in Wechselwirkung tritt.

## Revendications

1. Procédé d'utilisation d'un moteur à combustion interne à injection d'eau critique, dans lequel le carburant liquide ou gazeux, par exemple un carburant de l'ensemble formé par le pétrole, l'hydrogène, le gaz naturel, l'alcool, etc., est brûlé dans la chambre de combustion et le gaz de combustion agit comme fluide de travail, dans lequel l'injection d'eau hypocritique ou hypercritique (appelée eau critique dans ce qui suit) dont la température est supérieure à 250°C et la pression supérieure à 10 MPa commence pendant la course de compression avant que le carburant injecté s'enflamme dans la chambre de combustion,
ledit moteur étant un moteur à combustion interne de type à piston alternatif dans lequel les courses d'admission, de compression, de combustion et détente et d'échappement sont déterminées en fonction de l'angle de rotation du vilebrequin, l'écart entre le début et la fin de l'injection de ladite eau critique étant compris dans la plage de 90° BTDC ("before the top dead center" - avant le point mort haut) à 30° ATDC ("after the top dead center" - après le point mort haut),
tandis que dans le moteur à combustion interne alternatif, l'écart entre le début et la fin de l'injection de ladite eau critique est compris dans la plage comprise entre 80° BTDC et l'instant qui précède immédiatement l'allumage du carburant dans la chambre de combustion et l'injection s'arrête à un angle de vilebrequin de 5° BTDC ou juste avant.

2. Procédé d'utilisation d'un moteur à combustion interne à injection d'eau critique selon la revendication 1, dans lequel ladite eau critique est de l'eau hypercritique à une température supérieure à 374°C et à une pression supérieure à 22 MPa.

3. Procédé d'utilisation d'un moteur à combustion interne à injection d'eau critique selon la revendication 1, dans lequel ladite eau critique est de l'eau hypocritique ou supercritique produite par échange de chaleur avec le gaz d'échappement du moteur.

4. Procédé d'utilisation d'un moteur à combustion interne à injection d'eau critique selon la revendication 1, dans lequel ladite eau critique est injectée de telle sorte que les particules d'eau critique soient présentes dans la chambre de combustion avant que le carburant s'enflamme et qu'elles interagissent avec le carburant nébulisé dans la chambre de combustion.

5. Procédé d'utilisation d'un moteur à combustion interne à injection d'eau critique selon la revendication 1, dans lequel ladite eau critique est injectée de telle sorte que les particules d'eau produites par la combustion du carburant et les particules d'eau critique ne soient pas séparées en couches distinctes lors de l'opération de combustion.

6. Procédé d'utilisation d'un moteur à combustion interne à injection d'eau critique selon la revendication 1, dans lequel les particules d'eau critique nébulisées dans la chambre de combustion interne interagissent avec les particules de carburant nébulisées.

7. Procédé d'utilisation d'un moteur à combustion interne à injection d'eau critique selon la revendication 6, dans lequel ladite eau critique est injectée dans la chambre de combustion de manière à interagir avec le carburant injecté dans la chambre de combustion.
